# EUROPEAN PATENT APPLICATION

(11) **EP 4 811 298 A1**
(43) Date of publication of application: **23.09.2026**
(21) Application number: 25751476.0
(22) Date of filing: 05.02.2025
(51) Int. Cl.: G06V 10/764, G06V 10/774, G06V 10/80

(54) **OBJECT CATEGORY RECOGNITION MODEL TRAINING METHOD AND APPARATUS, AND OBJECT CATEGORY RECOGNITION METHOD AND APPARATUS**

(30) Priority: 09.02.2024 CN 202410178190
(71) Applicant: Tencent Technology (Shenzhen) Company Limited, Shenzhen, Guangdong 518057 (CN)
(72) Inventor: NIE, Qiang, Shenzhen, Guangdong 518057 (CN); FU, Weifu, Shenzhen, Guangdong 518057 (CN); LIN, Yuhuan, Shenzhen, Guangdong 518057 (CN); LI, Jialin, Shenzhen, Guangdong 518057 (CN); ZHOU, Yifeng, Shenzhen, Guangdong 518057 (CN); CHEN, Ying, Shenzhen, Guangdong 518057 (CN); TAO, Guangpin, Shenzhen, Guangdong 518057 (CN); LIU, Yong, Shenzhen, Guangdong 518057 (CN); WANG, Chengjie, Shenzhen, Guangdong 518057 (CN)
(74) Representative: EP&C
(86) International application number: PCT/CN2025/075724
(87) International publication number: WO 2025/167876

(57) **Abstract**

The present application discloses an object category recognition model training method and apparatus, and an object category recognition method and apparatus, which can be applied to various scenarios such as cloud technology, artificial intelligence, intelligent transportation, and the Internet of vehicles. The method comprises: acquiring a newly added sample image of a sample object; on the basis of an initial object category recognition model, constructing a teacher model and a student model; inputting the newly added sample image into the teacher model for performing first object category recognition, and obtaining a first sample category; performing fusion on the first sample category and a newly added object category, and obtaining a fused category; inputting the newly added sample image into the student model for performing second object category recognition, and obtaining a second sample category; and, on the basis of a difference between the second sample category and the fused category, training the student model, so as to obtain a final object category recognition model. According to the model training method of the present application, the training duration is greatly shortened, and the model updating efficiency is improved.

## Description

### RELATED APPLICATION

This application claims priority to Chinese Patent Application No. 202410178190.X, entitled "OBJECT CLASS RECOGNITION MODEL TRAINING METHOD AND APPARATUS, AND OBJECT CLASS RECOGNITION METHOD AND APPARATUS" filed with the China National Intellectual Property Administration on February 9, 2024.

### FIELD OF THE TECHNOLOGY

This application relates to the field of computer technologies, and in particular, to an object class recognition model training method and apparatus, and an object class recognition method and apparatus.

### BACKGROUND OF THE DISCLOSURE

In a service delivery process based on artificial intelligence (AI), a data volume collected for training a deep neural network model becomes larger as a project progresses. Especially in the field of visual perception (tasks such as recognition, segmentation, and detection based on images or videos), the data volume easily accumulates to be very large. During model iteration, continuously accumulating data not only increases consumption of training time and training cards (increasing service costs), but also makes it difficult to rapidly respond to and resolve some poorly performing application scene data (badcases) (reducing service efficiency). In addition, due to confidentiality and business benefit concerns, it is very common that historical data cannot be acquired or used.

In the related technology, full data is used for model iteration and incremental data is used for model fine adjustment. When the full data is used for model iteration, if a data volume is large, a quantity of cards and card time consumed during training are high. In addition, because historical stock data is usually much larger than the incremental data, a model responds poorly to newly added badcases. When the incremental data is used for iteration, as training time is lengthened or a quantity of fine adjustments is increased, the model gradually deflects, leading to catastrophic knowledge forgetting on historical data, and causing an overall capability of the model to decline quickly and become unstable. Incremental learning methods are primarily designed for class incremental scenarios. These methods pay more attention to an anti-forgetting effect in a model update process, and there is still no exemplary incremental method that can implement knowledge accumulation. Transfer learning pays attention only to performance on new data, and usually a field concerned by the transfer learning changes significantly, for example, changes from a cartoon picture to a natural scene.

### SUMMARY

This application provides an object class recognition model training method and apparatus, and an object class recognition method and apparatus. On a premise that historical data cannot be acquired, an initial object class recognition model can be trained based on newly added sample data, so that model training efficiency is improved while an accuracy rate of an object class recognition model is enhanced.

According to one aspect, an object class recognition model training method is provided in this application. The method includes:
acquiring a sample image of a sample object, the sample image having a first label of a first object class outside a set of object classes recognizable by an initial object class recognition model;
constructing a teacher model and a student model based on the initial object class recognition model, each of the teacher model and the student model being a copy of the initial object class recognition model;
inputting the sample image into the teacher model, to obtain a first recognition result;
merging the first recognition result with the first label, to obtain a merged recognition result;
inputting the sample image into the student model, to obtain a second recognition result; and
training the student model based on a difference between the second recognition result and the merged recognition result, to obtain a final object class recognition model.

According to another aspect, an object class recognition method is provided. The method includes:
acquiring an image of a first object; and
inputting the image into an object class recognition model, to obtain an object class of the first object,
the object class recognition model being obtained by the foregoing training method.

According to another aspect, an object class recognition model training apparatus is provided. The apparatus includes:
a sample image acquiring module, configured to acquire a sample image of a sample object, the sample image having a first label of a first object class outside a set of object classes recognizable by an initial object class recognition model;
a model construction module, configured to construct a teacher model and a student model based on the initial object class recognition model, each of the teacher model and the student model being a copy of the initial object class recognition model;
a first determining module, configured to input the sample image into the teacher model, to obtain a first recognition result;
a sample class merging module, configured to merge the first recognition result with the first label, to obtain a merged recognition result;
a second determining module, configured to input the sample image into the student model, to obtain a second recognition result; and
a training module, configured to train the student model based on a difference between the second recognition result and the merged recognition result, to obtain a final object class recognition model.

According to another aspect, an object class recognition apparatus is provided. The apparatus includes:
an image acquiring module, configured to acquire an image of a first object; and
a determining module, configured to input the image into an object class recognition model, to obtain an object class of the first object,
the object class recognition model being obtained by the foregoing training method.

According to another aspect, an electronic device is provided. The device includes a processor and a memory, the memory storing at least one instruction or at least one program, and the at least one instruction or the at least one program being loaded and executed by the processor to implement the foregoing object class recognition model training method or the object class recognition method.

According to another aspect, a computer storage medium is provided. The computer storage medium stores at least one instruction or at least one program, the at least one instruction or the at least one program being loaded and executed by a processor to implement the foregoing object class recognition model training method or the object class recognition method.

According to another aspect, a computer program product or a computer program is provided, the computer program product or the computer program including computer instructions, and the computer instructions being stored in a computer-readable storage medium. A processor of a computer device reads the computer instructions from the computer-readable storage medium, and the processor executes the computer instructions, so that the computer device executes and implements the foregoing object class recognition model training method or the object class recognition method.

The object class recognition model training method and apparatus, and the object class recognition method and apparatus provided in this application have the following technical effects:
This application discloses an object class recognition model training method, comprising: acquiring a sample image of a sample object, the sample image having a first label of a first object class outside a set of object classes recognizable by an initial object class recognition model; constructing a teacher model and a student model based on the initial object class recognition model; inputting the sample image into the teacher model to obtain a first recognition result; merging the first recognition result with the first label to obtain a merged recognition result. The merged recognition result not only contains correct answer information indicated by the first label, but also retains decision boundary information of the teacher model for the set of object classes, and corrects an error made by the teacher model in the first recognition result. In this way, the merged recognition result carries richer information for training the student model. After a second recognition result is obtained by inputting the sample image into the student model, the student model is trained based on a difference between the second recognition result and the fused recognition result, to obtain a final object class recognition model. Through such training, the student model can accurately learn decision boundary information and avoid repeating the error made by the teacher model, thereby improving a learning effect of the student model and enhancing accuracy of the final object class recognition model. Moreover, by means of the label merged processing, the initial object class recognition model can be updated using only the sample image in a model update training process without a need to acquire any initial sample image. The model improves model performance by learning new data without forgetting historical knowledge, thereby achieving a knowledge accumulation effect similar to that of a full-data model. In addition, compared with a full-data training approach, the model training method of this application greatly shortens training duration and improves model update efficiency.

### BRIEF DESCRIPTION OF THE DRAWINGS

FIG. 1 shows a schematic diagram of an object class recognition model training system according to an embodiment of this specification.
FIG. 2 shows a schematic flowchart of an object class recognition model training method according to an embodiment of this specification.
FIG. 3 shows a schematic flowchart of an initial object class recognition model training method according to an embodiment of this specification.
FIG. 4 shows a schematic flowchart of a method of respectively inputting processed sample data into a teacher model and a student model, to obtain first loss according to an embodiment of this specification.
FIG. 5 shows a schematic flowchart of a method of training a student model based on a difference between a second recognition result and a fused class according to an embodiment of this specification.
FIG. 6 shows a schematic flowchart of a method of obtaining an object class recognition model based on third loss according to an embodiment of this specification.
FIG. 7 shows a schematic flowchart of a method of updating a teacher model based on a model parameter of an updated student model, to obtain an object class recognition model according to an embodiment of this specification.
FIG. 8 shows a schematic flowchart of a method of adjusting a model parameter of a student model based on third loss until a training end condition is satisfied, and using a student model at an end of training as an updated student model according to an embodiment of this specification.
FIG. 9 shows a schematic flowchart of a method of performing iterative update on an updated student model and an updated teacher model, to obtain an object class recognition model according to an embodiment of this specification.
FIG. 10 shows performance test curves obtained by performing update training on a plurality of models based on a plurality of batches of newly added data according to an embodiment of this specification.
FIG. 11 shows a comparison diagram of model training frameworks of this embodiment and the related technology.
FIG. 12 shows a schematic flowchart of an object class recognition method according to an embodiment of this specification.
FIG. 13 shows a test curve diagram of performing performance tests by using a CIFAR-100 dataset on a model in the related technology and a model obtained through training in this solution according to an embodiment of this specification.
FIG. 14 shows a test curve diagram of performing performance tests by using an ImageNet-100 dataset on a model in the related technology and a model obtained through training in this solution according to an embodiment of this specification.
FIG. 15 shows a schematic structural diagram of an object class recognition model training apparatus according to an embodiment of this specification.
FIG. 16 shows a schematic structural diagram of an object class recognition apparatus according to an embodiment of this specification.
FIG. 17 shows a schematic structural diagram of a server according to an embodiment of this specification.

### DESCRIPTION OF EMBODIMENTS

First, some nouns and terminals appearing in a process of describing the embodiments of this specification are described as follows:
1. Full data model: A full data model is a model (e.g., an object class recognition model) obtained by performing model training by using all accumulated data.
2. Incremental data: Incremental data is newly added data and usually carries a mark, and a data volume of the incremental data is usually far smaller than that of full data.
3. Badcase data: Badcase data is scene data that an existing model struggles to resolve, or in other words, challenging data, for example, for an apple recognition model, those apple images that cannot be recognized are badcases.
4. Epoch: An epoch is a process in which a model completes training once by using all training data.
5. Batch: Because a memory capacity of a central processing unit (CPU) or a graphics processing unit (GPU) is limited, it is usually not feasible to train all data at a time, but all data is divided into a plurality of groups for training in sequence. A group of data formed in this way is referred to as a batch, and a data volume in each batch is referred to as batchsize.
6. Machine learning (ML): ML is a multi-field interdiscipline, and relates to a plurality of disciplines such as probability theory, statistics, approximation theory, convex analysis, and algorithm complexity theory. ML specializes in studying how a computer simulates or implements a human learning behavior to obtain new knowledge or skills, and reorganize an existing knowledge structure, so as to keep improving its performance. ML is a core of AI, is a basic way to make a computer intelligent, and is applied to various fields of AI. ML and deep learning generally include technologies such as an artificial neural network, a belief network, reinforcement learning, transfer learning, inductive learning, and learning from demonstrations.
7. Deep learning: A concept of deep learning is originated from research about artificial neural networks. A multi-layer perceptron including a plurality of hidden layers is one of deep learning structures. During the deep learning, an attribute type or feature is represented by combining lower-layer features into a more abstract higher layer, to discover distributed feature representation of data. In the method of this embodiment, an object class recognition model is obtained through deep learning training.

In the specification, claims, and accompanying drawings of this application, terms such as "first" and "second" are intended to distinguish between similar objects but do not necessarily indicate a specific order or sequence. Data used in this way may be interchanged in a proper circumstance, so that the embodiments of this application described herein can be implemented in a sequence different from those shown in the drawings or described herein. In addition, terms "include", "have", and any variants thereof are intended to cover a non-exclusive inclusion, for example, a process, method, system, product, or server that includes a series of operations or units is not necessarily limited to the operations or units specified expressly, but may include other operations or units not specified expressly or may include operations or units inherent to the process, method, product or device.

In some embodiments of this application, the term "module" or "unit" refers to a computer program or a part of the computer program that has a predetermined function, which works together with other relevant parts to achieve a predetermined objective, and may be wholly or partially implemented by using software, hardware (such as a processing circuit or a memory), or a combination thereof. Similarly, one processor (or a plurality of processors or memories) can be configured to implement one or more modules or units. In addition, each module or unit may be a part of an overall module or unit including a function of the module or unit. The term, involved in the following description, "some embodiments" describes subsets of all possible embodiments, but "some embodiments" may be the same subset or different subsets of all the possible embodiments and may be combined with each other without conflict.

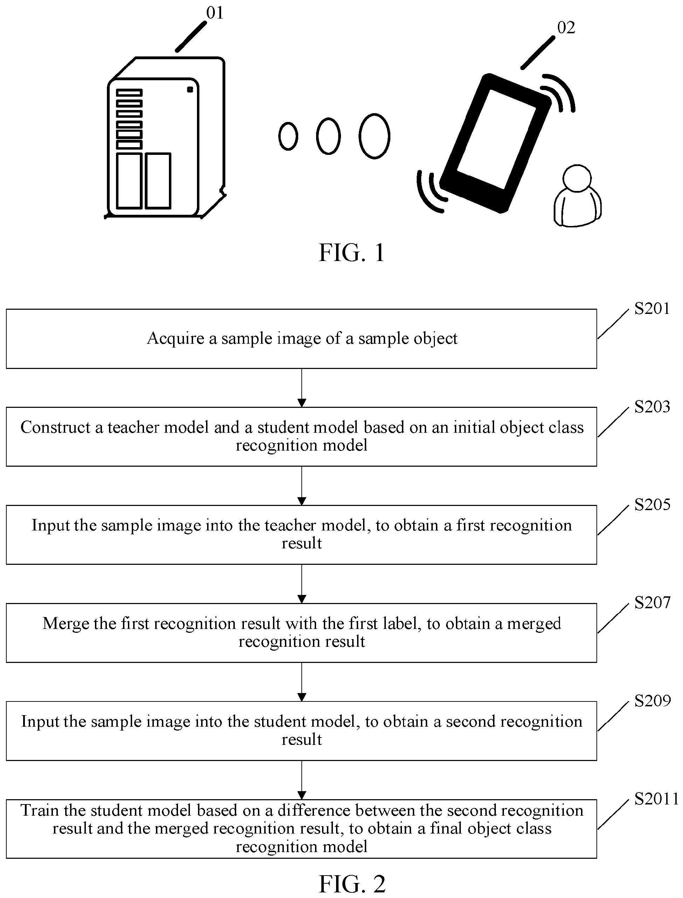

Referring to FIG. 1, FIG. 1 shows a schematic diagram of an object class recognition model training system according to an embodiment of this specification. As shown in FIG. 1, the object class recognition model training system may include at least a server 01 and a client 02.

Specifically, in the embodiments of this specification, the server 01 may include an independent server, a distributed server, or a server cluster including a plurality of servers, or may be a cloud server providing a basic cloud computing service such as a cloud service, a cloud database, cloud computing, a cloud function, cloud storage, a network service, cloud communication, a middleware service, a domain name service, a security service, a content delivery network (CDN), or a big data and artificial intelligence platform. The server 01 may include a network communication unit, a processor, a memory, and the like. Specifically, the server 01 may be configured to train a student model, to obtain an object class recognition model.

Specifically, in some embodiments of this specification, the client 02 may include a physical device of a type such as a smartphone, a desktop computer, a tablet computer, a notebook computer, a digital assistant, an intelligent wearable device, a smart speaker, an in-vehicle terminal, or a smart television, or may include software running in a physical device, for example, a web page provided by some service providers to users, or may be an application provided by the service providers to users. Specifically, the client 02 may be configured to query online a object class of an image of a first object.

An object class recognition model training method in this application is described below. FIG. 2 shows a schematic flowchart of an object class recognition model training method according to an embodiment of this specification. This specification provides method operation procedures described in this embodiment or the flowchart, but more or fewer operation procedures may be included based on conventional efforts or non-creative efforts. The order of the operations listed in this embodiment is merely one of a plurality of operation execution orders, and does not indicate the only execution order. When an actual system or server product is executed, sequential execution or parallel execution may be performed according to the method orders shown in this embodiment or the accompanying drawing (for example, in a parallel processor or multi-thread processing environment). Specifically, as shown in FIG. 2, the method may include the following operations:
S201: Acquire a sample image of a sample object. The sample image has a first label of a first object class outside a set of object classes recognizable by an initial object class recognition model. In other words, the sample image having the first label is a newly added sample image for the initial object class recognition model. The first object class is a newly added object class for initial object class recognition model.

In some embodiments of this specification, a sample image is obtained by photographing the sample object, or an image extracted from a sample video corresponding to the sample object. One sample object may correspond to one or more sample images. The sample object may include, but is not limited to, an entity in nature or a virtual object. In different application scenarios, sample objects are different. For example, the sample object may be an animal or a plant in nature. In this embodiment, the animal or the plant in nature may be classified. The sample object may alternatively be an electronic product, and the electronic product may be classified. The newly added object class may be configured for characterizing a class of the sample object in the sample image. For example, when the sample object is a cat, the newly added object class may be a Scottish Fold cat or the like.

In some embodiments of this specification, the sample image is a sample image newly added when an initial object class recognition model is trained, and there may be one or more sample images. Essentially, the newly added object class is an object class label of the sample image, and there may be one or more object class labels. The sample image may be labeled by using an image recognition method, or the newly added object class of the sample image may be manually marked.

S203: Construct a teacher model and a student model based on the initial object class recognition model. In some embodiments, each of the teacher model and the student model being a copy of the initial object class recognition model. The initial object class recognition model is obtained by performing object class recognition training by using an initial sample image of the sample object. Specifically, the initial object class recognition model is obtained by inputting the initial sample image of the sample object into a preset model for object class recognition. The initial sample image is marked with an initial sample object class, and the initial sample object class is different from the newly added object class.

In some embodiments of this specification, the newly added object class is newly added to the initial sample image. The initial sample image of the sample object may be inputted into the preset model for object class recognition training, to obtain the initial object class recognition model. When there is the newly added sample image, the model may be further updated based on the initial object class recognition model, thereby improving diversity of object classes recognized by an updated object class recognition model. The initial sample object class is different from the newly added object class. For example, when the sample object is a cat, the newly added object class may be a Scottish Fold cat, and the initial sample object class may include a Chinese Li Hua cat, a "Garfield" cat, a Persian cat, and the like. The initial object class recognition model can recognize only a Chinese Li Hua cat, a "Garfield" cat, and a Persian cat. Therefore, an updated object class recognition model not only can recognize a Chinese Li Hua cat, a "Garfield" cat, and a Persian cat, but also can recognize a Scottish Fold cat corresponding to the newly added object class.

In some embodiments of this specification, the initial object class recognition model may be copied to respectively obtain the teacher model and the student model. An initial teacher model and an initial student model are identical models, and are initial object class recognition models. A large model is usually a single complex network or a set of several networks, and has good performance and a generalization capability. A small model has a limited expression capability because of a small network size. Therefore, knowledge learned by the large model may be used to guide training of the small model, so that the small model has performance equivalent to that of the large model while a quantity of parameters is greatly reduced, thereby implementing model compression and acceleration. This is application of knowledge distillation and transfer learning in model optimization. Knowledge distillation adopts a teacher-student mode: a complex and large model is used as a teacher (teacher model), and a student (student model) has a simple structure. The teacher is used to assist training of the student model. The teacher has a strong learning capability, and knowledge learned by the teacher can be transferred to the student model with a weak learning capability, thereby enhancing a generalization capability of the student model.

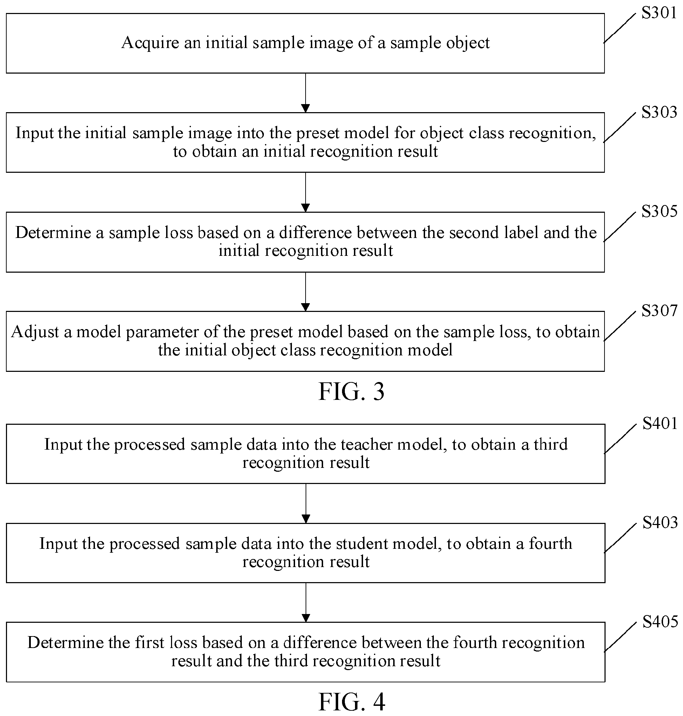

In some embodiments of this specification, as shown in FIG. 3, a method for obtaining the initial object class recognition model through training includes the following operations:
S301: Acquire the initial sample image of the sample object. The initial sample image is marked with a second label indicating one of the set of object classes.
S303: Input the initial sample image into the preset model for object class recognition, to obtain an initial recognition result. The object class recognition is object class recognition processing performed by the preset model, and the initial recognition result is a class of the sample object recognized by the preset model for the initial sample image.
S305: Determine a sample loss based on a difference between the second label and the initial recognition result.
S307: Adjust a model parameter of the preset model based on the sample loss, to obtain the initial object class recognition model. In some embodiments of this specification, a model parameter of the preset model is adjusted based on the sample loss until a training end condition is satisfied, and determine a preset model at an end of training as the initial object class recognition model.

In some embodiments of this specification, the initial sample image and the newly added sample image are different images corresponding to the same sample object, and included sample objects belong to different classes. The preset model may be a classification model or a classification network. For example, the preset model may include but is not limited to: an AlexNet (a deep learning-based image classification model, which may include five convolution layers and three fully-connected layers), a VGG network (a network using a plurality of continuous 3×3 convolution kernels, which is mainly formed by a stack of repeated convolution layers and pooling layers), a ResNet (a neural network model including a residual module), or the like. The initial sample image may be inputted into the preset model for image feature extraction, to obtain a sample initial image feature, and then initial object class recognition processing is performed on the sample initial image feature, to obtain the initial recognition result. Then, the sample loss is calculated based on the difference between the initial recognition result and the initial sample object class. In addition, the model parameter of the preset model is adjusted based on the sample loss until the training end condition is satisfied. Specifically, the model parameter of the preset model may be adjusted in a direction of reducing the sample loss. The training end condition may include, but is not limited to, that the sample loss is less than a preset loss threshold, or that the sample loss is less than the preset loss threshold and a quantity of iterations of model training reaches a preset quantity. The preset model at the end of training is determined as the initial object class recognition model.

In some embodiments of this specification, supervised training may be performed on the preset model based on the initial sample image and the initial sample object class marked by the initial sample image, to quickly and accurately obtain the initial object class recognition model, so that when there is the sample image, model update may be performed based on the initial object class recognition model, thereby improving model update efficiency. The initial sample object class marked by the initial sample image and the foregoing newly added object class belong to data of the same type. The training performed on the preset model is supervised training. In a supervised training process, the preset model can optimize the parameter of the preset model based on a difference between the initial recognition result recognized by the preset model and the marked initial sample object class, so that the initial recognition result subsequently recognized by the preset model and the initial sample object class are data of the same type, and the recognized initial recognition result is the same as or similar to the initial sample object class. Therefore, during subsequent object class processing, a model, such as the initial object class recognition model or the teacher model, obtained based on the preset model can recognize an outputted object class, and the object class recognized by the model and the marked object class belong to data of the same type.

S205: Input the sample image into the teacher model, to obtain a first recognition result.

In some embodiments of this specification, the sample image may be inputted into the teacher model, an image feature of the sample image is extracted by the teacher model, and first object class recognition processing is performed based on the extracted image feature, to obtain the first recognition result. The first recognition result and the newly added object class are data of the same type. The same type herein refers to the same data format. For example, the first recognition result and the newly added object class are both data in a text format, or are both data in a floating-point number format.

In some embodiments of this specification, after the teacher model and the student model are constructed based on the initial object class recognition model, the sample image may be inputted into the teacher model for first object class recognition processing, to obtain the first recognition result. Therefore, the student model is trained based on an outputted result (that is, the first recognition result) of the teacher model.

S207: Merge the first recognition result with the first label, to obtain a merged recognition result.

In some embodiments of this specification, the merging is performed on the first recognition result and the first label, and a merging process is shown in the following formula (1): ${y}_{f}^{k} \left(x\right) = \frac{\left({y}^{k}+{p}_{t}^{k}\right) / τ}{{\sum }_{j} \left({y}^{j}+{p}_{t}^{j}\right) / τ}$

The first object classes (i.e., newly added object classes) includes K categories of one-hot labels, where K is a positive integer. *y^{k}* is a one-hot label corresponding to a k^{th} first object class, where K∈ [1, K]. The first recognition result includes J categories of one-hot labels, and *y^{j}* is a one-hot label corresponding to a j^{th} class, where j ∈ [1, J]. ${p}_{t}^{k}$ is a score for the teacher model predicting the class of the sample object in the newly added sample image as the k^{th} class, ${p}_{t}^{j}$ is a score for the teacher model predicting the class of the sample object in the newly added sample image as the j^{th} class, and *τ* is a smoothing temperature. A merged label ${y}_{f}^{k} \left(x\right)$ not only carries correct answer information indicated by the newly added object class, but also retains decision boundary information for the original recognizable classes (i.e., the set of object classes recognizable by an initial object class recognition model ) reflected in the teacher model's prediction, and corrects any misclassification error of the teacher model contained in the first sample class.

S209: Input the sample image into the student model, to obtain a second recognition result.

In some embodiments of this application, the sample image is inputted into the student model. An image feature of the sample image is extracted, and second object class recognition processing is performed based on the extracted image feature, to obtain the second recognition result.

S2011: Train the student model based on a difference between the second recognition result and the merged recognition result, to obtain a final object class recognition model.

In some embodiments of this specification, a third loss may be constructed based on the difference between the second recognition result and the merged recognition result, and the student model is trained by using the third loss, so that a trained student model is used as the final object class recognition model, or the final object class recognition model may be further obtained based on the trained student model.

In some embodiments, after acquiring the sample image of the sample object, the method further includes:
performing data perturbation processing on the sample image, to obtain processed sample data, the perturbation processing being configured for introducing noise into the sample image. In other words, the perturbation processing is configured for changing distribution of the sample image; and
respectively inputting the processed sample data into the teacher model and the student model, to obtain a first loss.

In some embodiments of this specification, in a process of training the student model, considering that historical data(i.e., the initial sample image) cannot be acquired, and there is little new data, boundary information (for example, the newly added object class) reserved by using formula (1) is limited. Some embodiments further provides a method of perturbating an input space to distill more decision boundary information. Data perturbation processing is configured for augmenting sample data. Data perturbation processing may include, but is not limited to, adding Gaussian noise or other noise to or performing data transformation processing on the sample image, to obtain the processed sample data. The processed sample data does not have a label, and the first loss is determined through unsupervised training.

For example, strong Gaussian noise is randomly added to the sample image, to redistribute the sample image in a model decision space, and distribute as many samples as possible around a decision, to perform knowledge distillation on contaminated data, thereby achieving an effect of complete boundary distillation. The Gaussian noise refers to a type of noise whose probability density function conforms to a Gaussian distribution Q (that is, a normal distribution). Common Gaussian noise includes fluctuation noise, cosmic noise, thermal noise, shot noise, and the like. In addition to common noise suppression methods, mathematical statistics methods are often used to suppress the Gaussian noise. If an amplitude distribution of a piece of noise follows the Gaussian distribution and a power spectral density of the noise is evenly distributed, the noise is referred to as white Gaussian noise. A fact that the white Gaussian noise has uncorrelated second-order moments at different time instants and a constant first-order moment reflects temporal correlation of successive signals. The white Gaussian noise includes thermal noise and shot noise. In testing and modeling of a communication channel, the Gaussian noise is used as additive white noise to generate additive white Gaussian noise. A method of contaminating the input space is shown in formula (2), where *X* is the sample image, *X*' is processed sample data, *norm(X)* represents a standardizing operation on the sample image, and *G(µ, δ*) is Gaussian noise with a mean value *µ* and variance *δ*. $X ′ = norm \left(X\right) + G \left(μ, δ\right)$

In some embodiments of this specification, as shown in FIG. 4, respectively inputting the processed sample data into the teacher model and the student model, to obtain the first loss includes the following operations:
S401: Input the processed sample data into the teacher model, to obtain a third recognition result.
S403: Input the processed sample data into the student model, to obtain a fourth recognition result.
S405: Determine the first loss based on a difference between the fourth recognition result and the third recognition result.

In some embodiments of this specification, the processed sample data may be respectively inputted into the teacher model and the student model, to obtain the third recognition result and the fourth recognition result. Unsupervised training is performed based on the third recognition result and the fourth recognition result, and the first loss is determined based on the difference between the fourth recognition result and the third recognition result. It can be seen that in this manner, when the processed sample data does not have the label, the first loss can still be determined. In this way, a quantity of labels required in a model training process can be reduced, thereby saving processing resources (for example, storage spaces) occupied by the labels.

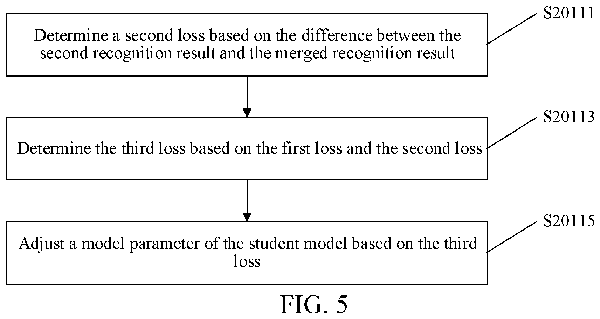

For example, as shown in FIG. 5, training the student model based on the difference between the second recognition result and the merged recognition result includes the following operations:
S20111: Determine a second loss based on the difference between the second recognition result and the merged recognition result.

In some embodiments of this specification, supervised training may be performed based on the second recognition result and the merged recognition result, and the second loss is obtained by calculating the difference between the second recognition result and the merged recognition result.

S20113: Determine the third loss based on the first loss and the second loss.

In some embodiments of this specification, a sum of the first loss and the second loss may be calculated to obtain the third loss. Alternatively, weights respectively corresponding to the first loss and the second loss may be set, and a weighted sum of the first loss and the second loss is calculated, to obtain the third loss.

S20115: Adjust a model parameter of the student model based on the third loss.

In some embodiments of this specification, an entire decision boundary distillation process, that is, a loss function corresponding to the third loss, is shown in formula (3). On the sample image, boundary distillation and a new knowledge learning effect are both implemented by using a fusion label. Boundary distillation is mainly performed on the processed sample data *X*'. In this way, when the model parameter of the student model is adjusted based on the third loss, the student model can learn more knowledge, thereby improving accuracy of adjusting the model parameter of the student model. Formula (3) is configured for training the student model, where N is a quantity of sample images, X is a set of sample images, *X '* is a set of the processed sample images (i.e., the processed sample data). x' is a processed sample image. ps(·) is the class probability distribution (softmax probabilities) output by the student model, which is the target of training optimization. pt(·) is the class probability distribution output by the teacher model, serving as a soft supervisory signal for knowledge distillation. yf (x) is a merged recognition result. *yⱼ*(x)log*pₛ*(x) is a second loss function corresponding to the second loss, pₜ(x)log*pₛ*(x') is a first loss function corresponding to the first loss, and λ is a weight of the first loss function. L_{cls} is the third loss. ${L}_{cls} = - \frac{1}{N} \left({\sum }_{x ∼ X} {y}_{f} \left(x\right) log {p}_{s} \left(x\right)+λ{\sum }_{x ′ ∼ X ′} {p}_{f} \left(x′\right) log {p}_{s} \left(x′\right)\right)$

In some embodiments, the model parameter of the student model may be adjusted based on the third loss until the training end condition is satisfied, and a student model at an end of the training is used as the final object class recognition model. In addition, knowledge consolidation (KC) may alternatively be performed on the teacher model by using a model parameter of the student model at the end of the training, and a final teacher model is used as the final object class recognition model. KC refers to stably transferring and merging the new knowledge learned by the student model on incremental data into the teacher model, while preventing the teacher model from forgetting old knowledge.

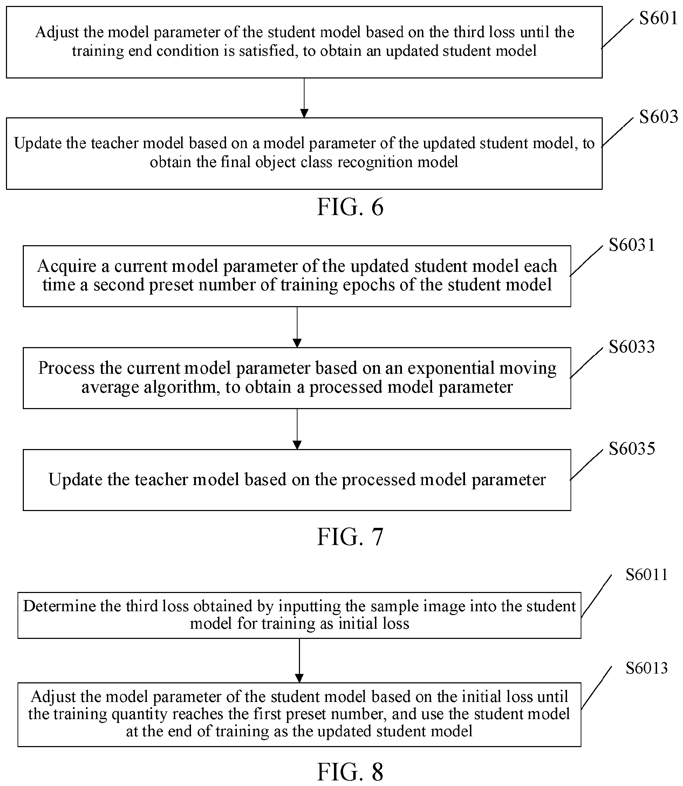

In some embodiments of this specification, as shown in FIG. 6, the method further includes the following operations:
S601: Adjust the model parameter of the student model based on the third loss until the training end condition is satisfied, to obtain an updated student model.
S603: Update the teacher model based on a model parameter of the updated student model, to obtain the final object class recognition model.

In some embodiments of this specification, the model parameter of the student model may be adjusted based on the third loss until the training end condition is satisfied. The training end condition may include that the third loss is less than a preset threshold or that the third loss is less than the preset threshold and a quantity of iterations reaches a preset quantity. Then, the student model at the end of the training is used as the updated student model.

In some embodiments of this specification, updating the teacher model based on the model parameter of the updated student model, to obtain the final object class recognition model includes the following operations:

Update the teacher model based on the model parameter of the updated student model, to obtain an updated teacher model.

Perform iterative update on the updated student model and the updated teacher model, to obtain the final object class recognition model.

In some embodiments of this specification, as shown in FIG. 7, updating the teacher model based on the model parameter of the updated student model, to obtain the final object class recognition model includes the following operations:
S6031: Acquire a current model parameter of the updated student model each time a second preset number of training epochs of the student model.
S6033: Process the current model parameter based on an exponential moving average algorithm, to obtain a processed model parameter.
S6035: Update the teacher model based on the processed model parameter. The updated teacher model is determined as the final object class recognition model.

In some embodiments of this specification, an exponential moving average (EMA), also referred to as a weighted moving average, is an averaging method that gives a higher weight to recent data. The current model parameter of the updated student model may be processed by using the exponential moving average algorithm, to obtain the processed model parameter. Moreover, a model parameter in the teacher model is replaced with the processed model parameter, to update the teacher model. The updated the teacher model is determined as the final object class recognition model.

In some embodiments, the method further includes the following operations:
Update, after a number of training epochs of the student model reaches a first preset number, the teacher model based on the model parameter of the student model, to obtain the final object class recognition model; wherein the training epochs are epochs for training the student model on the sample image. For a process of training the student model once by using the sample image, refer to related descriptions of the foregoing operations S20111 to S20115. Each time the student model is trained, the model parameter of the student model is adjusted once. It can be seen that in this manner, after the student model is fully trained based on the first preset number of training epochs and learns new knowledge, the teacher model is updated based on the model parameter of the student model. In this way, not only can update accuracy of the teacher model be improved, but also frequent update of the teacher model can be avoided, so that knowledge consolidation can be better performed on the teacher model, thereby improving performance of the teacher model and saving processing resources consumed by frequently updating the teacher model.

For example, the updating, after a number of training epochs of the student model reaches a first preset number, the teacher model based on the model parameter of the student model, to obtain the final object class recognition model includes the following operations:
Update, after the training epochs of the student model reaches the first preset number, the teacher model based on the model parameter of the student model each time a second preset number of training epochs of the student model is completed.

Use the updated teacher model as the final object class recognition model, or perform, after the training epochs of the student model reaches the first preset number, iterative update on the updated teacher model based on the model parameter of the student model, to obtain the final object class recognition model. The iterative update refers to updating the teacher model for a plurality of times, and each update is performed on an teacher model obtained through previous update.

In some embodiments of this specification, after the training epochs of the student model reaches the first preset number, the teacher model may be updated based on the model parameter of the student model, to obtain the updated teacher model. In addition, in the training process after the training epochs of the student model reaches the first preset number, iterative update is performed on the updated teacher model based on the model parameter of the student model, so that the final object class recognition model can be obtained through rapid training, and model performance of the final object class recognition model can be improved by performing iterative update on the updated teacher model.

In some embodiments, the updating, after the training epochs of the student model reaches the first preset number, the teacher model based on the model parameter of the student model each time a second preset number of training epochs of the student model is completed, to obtain the final object class recognition model includes the following operations:
Update, after the training epochs of the student model reaches the first preset number, the teacher model based on the model parameter of the student model each time a second preset number of training epochs of the student model is completed, to obtain the updated teacher model.

Determine the updated teacher model as the final object class recognition model after training is completed.

It can be seen that in the foregoing manner, not only can model parameters of the student model and the teacher model be continuously and alternately updated in the training process, thereby improving an accuracy rate of the object class recognition model, but also an update frequency of the updated teacher model can be restricted based on the second preset number, to avoid a case in which after the student model is trained for the first preset number, the teacher model is updated once each time the student model is trained. In this way, knowledge consolidation can be better performed on the updated teacher model within an update period (that is, a period corresponding to the second preset number), thereby improving performance of the updated teacher model and saving processing resources consumed by frequently updating the teacher model.

In some embodiments of this specification, updating the updated teacher model based on the model parameter of the student model each time the quantity of training reaches the second preset number includes the following operations:
Acquire a current model parameter of the student model each time the quantity of training reaches the second preset number.

Process the current model parameter based on the exponential moving average algorithm, to obtain the processed model parameter.

Update the updated teacher model based on the processed model parameter.

In some embodiments of this specification, the first preset number may be set according to an actual situation. For example, the first preset number may be set to 10 epochs. It may be set that the second preset number is less than the first preset number. For example, the second preset number may be set to 5 epochs. After the quantity of training reaches the first preset number, the updated teacher model is updated based on the model parameter of the student model each time a quantity of training reaches the second preset number. In this way, the final object class recognition model with a high accuracy rate can be obtained through rapid training.

Because the exponential moving average algorithm is the averaging method that gives a higher weight to recent data, in the foregoing manner, the current model parameter is processed based on this method, so that more attention is paid to recent data with a higher weight in the processing process, thereby obtaining the processed model parameter that better conforms to the recent data. In this way, real-time performance of the processed model parameter is improved, thereby improving the model performance of the final object class recognition model obtained by updating the updated teacher model based on the processed model parameter.

In some embodiments, processing the current model parameter based on the exponential moving average algorithm, to obtain the processed model parameter includes the following operations:
Determine a first weight of the teacher model and a second weight of the student model based on a number of training epochs corresponding to the current model parameter, the first weight decreasing as the number of training epochs corresponding to the current model parameter increases, and the second weight increasing as the number of training epochs corresponding to the current model parameter increases, wherein the number of training epochs corresponding to the current model parameter is a number of epochs for which the student model is trained to obtain the current model parameter.

Process the current model parameter based on the first weight, the second weight, and the exponential moving average algorithm, to obtain the processed model parameter. For example, the processed model parameters are obtained by adding the first product of a current model parameter of the teacher model and the first weight to the second product of the current model parameter of the student model and the second weight. In the context of updating the teacher model using an exponential moving average algorithm, the "current model parameter of the teacher model" refers to the parameter value of the teacher model before the update (i.e., the old parameter), while the "processed model parameter" obtained after the weighted summation becomes the updated teacher model parameter. Thus, the term "current model parameter of the teacher model" as used in the claims and description means the parameter existing in the teacher model immediately prior to the execution of the updating operation.

In some embodiments of this specification, an ordinary model EMA operation does not have a knowledge consolidation capability. Exponential averaging of a model parameter is performed at each operation of model iteration, causing rapid homogenization of the teacher model and the student model, and consequently, the decision boundary fails to be distilled, causing the model to suffer from severe forgetting and overfit to new data. Therefore, this embodiment provides a dynamic knowledge consolidation KC-EMA operation suitable for knowledge consolidation. By setting a frozen window for training only the student model, it is ensured that EMA of the model parameter is performed only after the student model is fully trained and learns new knowledge.

For example, a time window is set to 10 epochs, and one epoch is a process in which a deep learning model completes training once by using all training data. In other words, the KC-EMA starts to be executed after the student model is trained for 10 epochs. In an execution process, KC-EMA is executed once every five epochs, and update momentum (α) of the EMA is set to a dynamic value that decreases as the number of training epochs increases, as shown in formula (4): $α = min \left({α}_{0},1-\frac{e}{e + {e}_{w}}\right)$

α is a current value of the first weight, α₀ is an initial value of the first weight, e is the number of training epochs, and *e_{w}* refers to the first preset number. Formula (4) accelerates a knowledge consolidation process from the student model to the teacher model as the student model continues to improve.

An update formula (5) corresponding to the EMA is as follows: *θₜ* is the model parameter of the teacher model, and *θₛ* is the model parameter of the student model. The first weight α acts on the teacher model, and in a model update process, α becomes smaller. 1 - α is the second weight, and acts on the student model. Therefore, a weight value of the student model is larger. ${θ}_{t} ← {αθ}_{t} + \left(1-α\right) {θ}_{s}$

In the method provided in this solution, although both the student model and the teacher model are obtained by copying the initial object class recognition model, and are completely the same models initially, it can be known based on the foregoing descriptions that the student model S actually acts as a role of quickly learning new data, while the teacher model T is a slow learner and is a stabilizer of balancing old and new knowledge. In other words, an update frequency of the model parameter of the student model is completely different from an update frequency of the model parameter of the teacher model. With different update frequencies, the teacher model and the student model may be gradually changed into two models having different model parameters. Moreover, compared with the model parameter of the student model, the model parameter of the teacher model has a lower update frequency, which can better balance new and old knowledge learned in the model training process, thereby achieving better model performance.

For example, as shown in FIG. 8, adjusting the model parameter of the student model based on the third loss until the training end condition is satisfied, and use the student model at the end of training as the updated student model includes the following operations:
S6011: Determine the third loss obtained by inputting the sample image into the student model for training as initial loss.
S6013: Adjust the model parameter of the student model based on the initial loss until the training quantity reaches the first preset number, and use the student model at the end of training as the updated student model.

In some embodiments of this specification, the first preset number may be set according to an actual situation. For example, the first preset number may be set to 10 epochs. After training is performed once, the model parameter of the student model may be adjusted based on the initial loss until the quantity of training reaches the first preset number, and the student model at the end of the training is used as the updated student model.

For example, the updated student model is trained based on the sample image, and when the training quantity in the training process reaches the second preset number, a model parameter of a current student model is acquired. The updated teacher model is updated based on the model parameter of the current student model, to obtain the final object class recognition model.

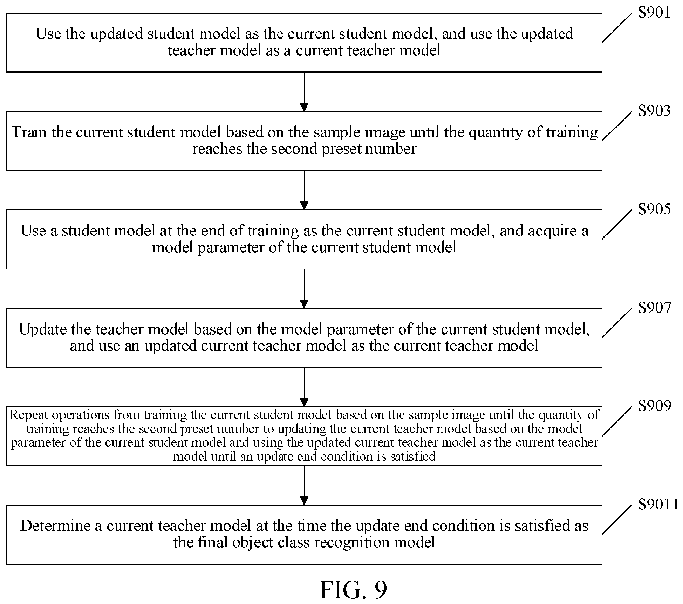

In some embodiments of this specification, as shown in FIG. 9, performing iterative update on the updated student model and the updated teacher model, to obtain the final object class recognition model includes the following operations:
S901: Use the updated student model as the current student model, and use the updated teacher model as a current teacher model.
S903: Train the current student model based on the sample image until the quantity of training reaches the second preset number.
S905: Use a student model at the end of training as the current student model, and acquire a model parameter of the current student model.
S907: Update the teacher model based on the model parameter of the current student model, and use an updated current teacher model as the current teacher model.
S909: Repeat operations from training the current student model based on the sample image until the quantity of training reaches the second preset number to updating the current teacher model based on the model parameter of the current student model and using the updated current teacher model as the current teacher model until an update end condition is satisfied.
S9011: Determine a current teacher model at the time the update end condition is satisfied as the final object class recognition model.

In some embodiments of this specification, it may be set that the second preset number is less than the first preset number. For example, the second preset number may be set to 5 epochs. The updated student model is used as the current student model and the updated teacher model is used as the current teacher model. The current student model is trained based on the sample image until the quantity of training reaches the second preset number. The current student model at the end of the training is used as the current student model, and the model parameter of the current student model is acquired. The current teacher model is updated based on the model parameter of the current student model, and the updated current teacher model is used as the current teacher model. Return to the operation of training the current student model based on the sample image until the quantity of training reaches the second preset number, and repeat subsequent operations. The model parameter of the current student model is acquired each time the quantity of training in the training process reaches the second preset number. The updated teacher model is updated based on the model parameter of the current student model, to obtain the object class recognition model, so that model parameters of the student model and the teacher model are continuously and alternately updated in the training process, thereby improving an accuracy rate of the final object class recognition model.

In some embodiments of this specification, some historical data may further be added for training. Practical application of artificial intelligence (AI) is largely limited by a complex update process of a model or a response speed for newly added challenging data. The deep learning model usually needs to be trained for long time, leading to persistently high operating costs and making it difficult to quickly respond to a problem in a service. These problems make it difficult for deployment of an AI system to be trusted and approved. In addition, the deep learning model usually needs to keep all data for training. In scenarios in which data is lost due to a factor such as secrecy or data storage costs are limited, it is difficult to update and upgrade the model, further limiting application of an AI model. An instance incremental learning method provided in this method can greatly speed up a process of iterative update of the model (reduce costs), and maintain a knowledge accumulation effect (increase efficiency) similar to that of a full data model. The method of this embodiment can learn new knowledge without forgetting old knowledge in absence of historical data.

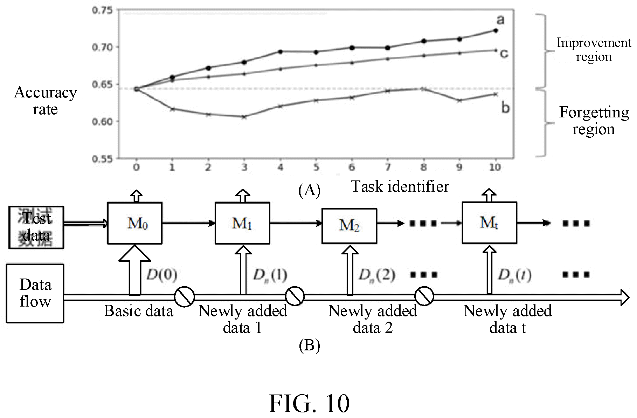

For example, as shown in FIG. 10, FIG. 10 shows performance test curves obtained by performing update training on a plurality of models based on a plurality of batches of newly added data. (A) in FIG. 10 shows performance test curves respectively corresponding to a model obtained based on full data training, a model obtained based on model fine tuning, and the object class recognition model obtained in this embodiment. A test curve represents a correspondence between a task identifier and an accuracy rate. A plurality of task identifiers correspond to tasks of the same type, and different task identifiers correspond to different pieces of newly added data. The curve includes a forgetting region and an improvement region, where the forgetting region refers to an accuracy rate result region obtained by performing model training without using the historical data before the newly added data, and the improvement region refers to an accuracy rate result region obtained by considering the historical data before the newly added data in the model training process. Curve a is a performance test curve corresponding to the model obtained based on full data training, curve b is a performance test curve corresponding to the model obtained based on model fine tuning, and curve c is a performance test curve corresponding to the object class recognition model obtained in this embodiment. (B) in FIG. 10 shows a model flow M and a data flow D corresponding to each model in (A) in FIG. 10. In an initial stage, sufficient data D(0) is generally collected to train a version of an initial model M₀. As services are performed, new data of the same type but slightly different in format continues to appear. For example, badcases are usually mined emphatically on a production line for model iteration, to improve a model capability. Assuming that a first batch of new data *Dₙ(1)* arrives, because historical data cannot be acquired, iterative training is usually performed on the model M₀ by using only the new data *Dₙ(1)*. The model M₀ is updated to M₁ after training. By analogy, a model flow that is continuously and quickly updated is formed. In the model update process, similar to the model obtained by using full data training, the model can implement rapid knowledge accumulation. It can be seen that, an accuracy rate of the model obtained by performing update training each time in this embodiment is much higher than an accuracy rate of the model obtained based on model fine tuning, and is slightly lower than an accuracy rate of the model obtained based on full data training. However, training duration of the model obtained based on full data training is much longer than training duration of the model in this embodiment.

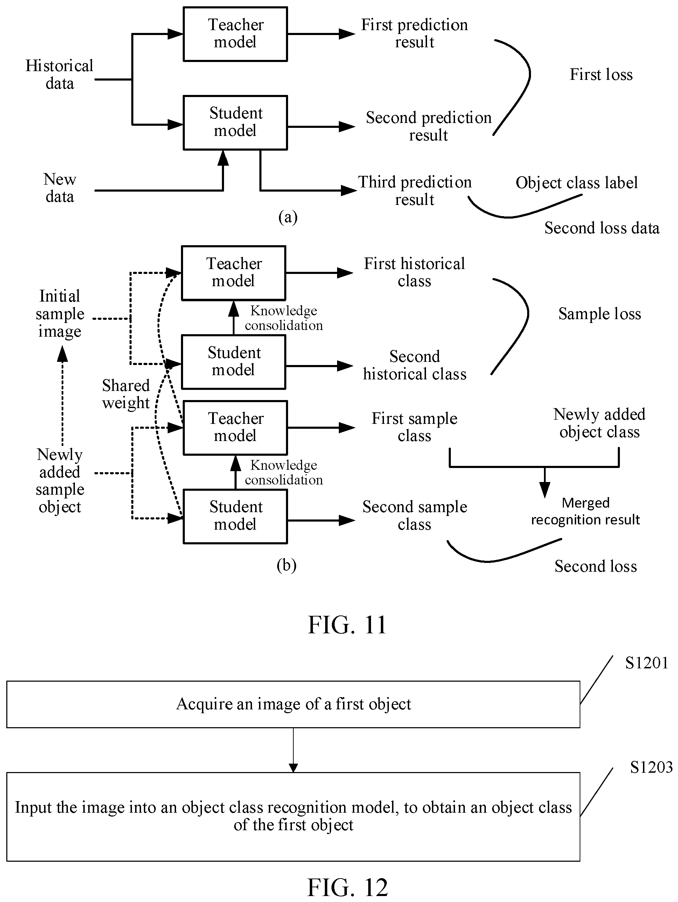

As shown in FIG. 11, FIG. 11 shows a comparison diagram of model training frameworks of this embodiment and the related technology. (a) in FIG. 11 is a framework diagram of training a teacher model (T) and a student model (S) based on knowledge distillation in the related technology, and (b) in FIG. 11 is a framework diagram of training a teacher model (T) and a student model (S) by using a decision boundary distillation method with knowledge consolidation in this embodiment. In the related technology, historical data is inputted into both the teacher model and the student model, a first loss is determined based on prediction results outputted by the two models, an updated student model is obtained based on the first loss, and then the updated student model is updated by using only new data. To be specific, the new data is inputted into the updated student model, a second loss is determined based on a third prediction result outputted by the updated student model and an object class label corresponding to the new data, and an application model is obtained based on the second loss. However, in this embodiment, the new data (a sample image) is inputted into both the teacher model and the student model, the student model is trained by using an output result of the teacher model, then, knowledge consolidation is performed on the teacher model by using a trained student model, and finally, the teacher model is used as the application model. A specific training process is as follows: An initial sample image is inputted into the teacher model and the student model respectively, to obtain a first historical class and a second historical class, and sample loss is calculated. When there is the sample image, the sample image is inputted into a teacher model and a student model obtained through previous training, and first loss is determined based on output results of the teacher model and the student model. A merged recognition result is obtained based on a first recognition result outputted by the teacher model and a newly added object class corresponding to the sample image, and then second loss is obtained based on a second recognition result outputted by the student model and the merged recognition result. Finally, a third loss is determined based on the first loss and the second loss. Then, a parameter of the student model is adjusted based on the third loss, then knowledge consolidation is performed on the teacher model by using a trained student model, and finally, the teacher model is used as the application model (a final object class recognition model).

According to the method of this embodiment, model iteration can be performed without historical data, a capability of the model is improved, and a learned capability is not forgotten, which not only saves time, but also improves efficiency of responding to challenging data in a service scenario. In conclusion, this technical solution can mainly resolve the following problems:
1. Reducing consumption of training time and graphics processing unit (GPU) cards, and improving a response speed and efficiency for challenging data in an application scenario: Iterative training is performed on an existing model by using only the newly added data, which saves time and requires fewer GPUs compared with training from scratch by using full data. In the service scenario, after the challenging data (badcases) is returned, model iteration is usually performed again by using all data with reference to historical data. In addition to consuming long time, this method may cause a low proportion of challenging data in all data, and after training is completed, a perceptive capability of the model for the newly added data is not greatly improved. This method relates only to newly added challenging data, and can effectively avoid this problem.
2. Problems of knowledge accumulation and knowledge forgetting: Only newly added data is used to perform model fine tuning on a conventional model, which easily leads to forgetting past knowledge. According to this method, the problem of forgetting is alleviated by using decision boundary distillation, and knowledge accumulation of the model is implemented based on the distillation for the first time by using boundary expansion and knowledge consolidation.
3. Problem of updating and upgrading a model when there is no historical data.
4. The method may be easily integrated into training of any model, and has broad prospects for promotion and application.

It can be seen from the technical solution provided in the foregoing embodiment of this specification that this embodiment of this specification discloses an object class recognition model training method, including: acquiring a sample image of a sample object, the sample image having a first label of a first object class outside a set of object classes recognizable by an initial object class recognition model; constructing a teacher model and a student model based on the initial object class recognition model; inputting the sample image into the teacher model to obtain a first recognition result; merging the first recognition result with the first label to obtain a merged recognition result. The merged recognition result not only contains correct answer information indicated by the first label, but also retains decision boundary information of the teacher model for the set of object classes, and corrects an error made by the teacher model in the first recognition result. In this way, the merged recognition result carries richer information for training the student model. After a second recognition result is obtained by inputting the sample image into the student model, the student model is trained based on a difference between the second recognition result and the fused recognition result, to obtain a final object class recognition model. Through such training, the student model can accurately learn decision boundary information and avoid repeating the error made by the teacher model, thereby improving a learning effect of the student model and enhancing accuracy of the final object class recognition model. Moreover, by means of the label merged processing, the initial object class recognition model can be updated using only the sample image in a model update training process without a need to acquire any initial sample image. The model improves model performance by learning new data without forgetting historical knowledge, thereby achieving a knowledge accumulation effect similar to that of a full-data model. In addition, compared with a full-data training approach, the model training method of this application greatly shortens training duration and improves model update efficiency.

According to an embodiment of this specification, an object class recognition method is further provided. As shown in FIG. 12, the method includes the following operations:
S1201: Acquire an image of a first object.

In some embodiments of this specification, the first object and a sample object are objects in the same field. The image may be an image obtained by photographing the first object, or an image extracted from a to-be-recognized video corresponding to the first object, and one first object may correspond to one or more images.

S1203: Input the image into an object class recognition model, to obtain an object class of the first object, wherein the object class recognition model is obtained by the foregoing training method.

In some embodiments of this specification, when the first object corresponds to a plurality of images, the object class of the first object may be determined based on class prediction results of the plurality of images.

In some embodiments of this specification, performance tests are respectively performed on a model in the related technology and a model obtained through training in this solution by using CIFAR-100 and ImageNet-100 datasets. CIFAR, an abbreviation of "Canadian Institute for Advanced Research" developed by Canadian computer scientists Alex Krizhesky, Vinod Nair, and Geoffrey Hinton, is a dataset commonly used for image recognition. A CIFAR-100 dataset is a subset of a CIFAR dataset, has 100 categories in total, and each class includes 600 images. 50,000 training images and 10,000 test images are included. Each image has a size of 32x32, and is marked with a class to which the image belongs. ImageNet-100 is a subset of ImageNet ILSVRC2012, and a training set of ImageNet-100 is randomly selected from an original training set and includes 500 instances of 100 categories. A validation set is corresponding 100 categories of an original validation set. An ilsxxs-2012 dataset is a used image recognition dataset, and is one of datasets of an ImageNet Large Scale Visual Recognition Challenge (ILSVRC) competition. An ilsvrc-2012 dataset is a part of an ImageNet project, and is intended to promote the development of the computer vision field. The dataset, published in 2012, includes 1.2 million images from 1000 different categories, and the images are accurately marked. Each class has approximately 1000 training images and 50 validation images that are configured for model training and evaluation. The ilsvrc-2012 dataset includes a wide variety of image categories, covering various aspects such as people, animals, plants, objects, and scenarios. Resolution of these images is also different. Some images are very clear, and some images are blurry. In addition, the dataset further includes some challenging images, for example, images under conditions such as occlusion, rotation, scaling, and a complex background.

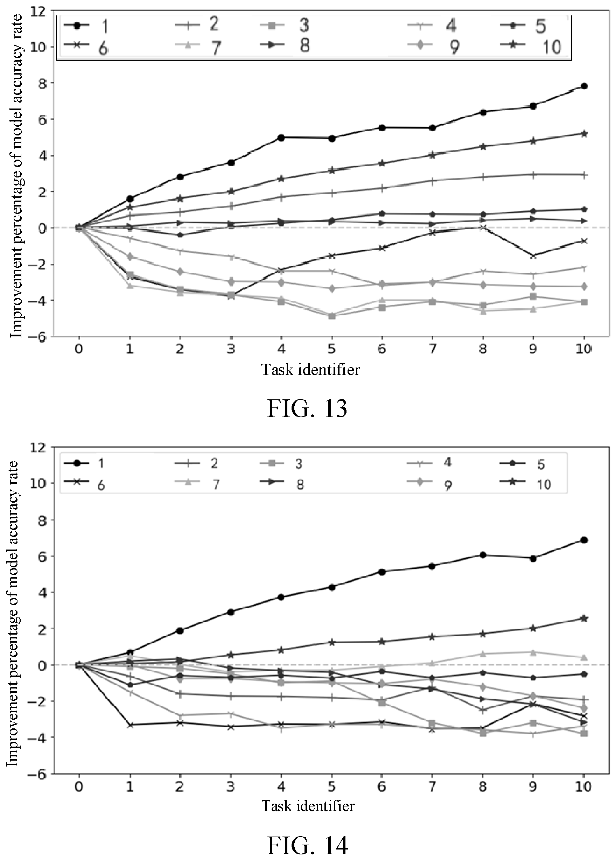

As shown in FIG. 13 and FIG. 14, FIG. 13 shows a test curve diagram of performing performance tests by using a CIFAR-100 dataset on a model in the related technology and a model obtained through training in this solution, and FIG. 14 shows a test curve diagram of performing performance tests by using an ImageNet-100 dataset on a model in the related technology and a model obtained through training in this solution. A horizontal coordinate is a task identifier, different task identifiers correspond to different sample images, and a vertical coordinate is a percentage of accuracy improvement of the model. Meanings of curve identifiers in FIG. 13 and FIG. 14 are as follows:
Curve 1: Full-data, a full data training model;
Curve 2: LwF: learning without forgetting, a learning without forgetting model;
Curve 3: Pooled outputs distillation for small-tasks incremental learning, PODNet for short, a pooled outputs distillation for small-tasks incremental learning model;
Curve 4: Dynamically expandable representation for class incremental learning, a dynamically expandable representation for class incremental learning model;
Curve 5: Balancing between forgetting and acquisition in incremental subpopulation learning, a balance between forgetting and acquisition in incremental subgroup learning model;
Curve 6: Fine-tune, a fine-tuning model;
Curve 7: Incremental classifier and representation learning, iCarl for short, an incremental classifier and representation learning model;
Curve 8: Incremental learning in online scenario, Online_learning for short, an incremental learning in online scenario model;
Curve 9: Online prototype learning for online continual learning, OnPro for short, an online prototype learning for online continual learning model; and
Curve 10: The object class recognition model in this embodiment.

It can be seen from FIG. 13 and FIG. 14 that, when only new data is used, only the object class recognition model in this embodiment can implement stable model improvement on CIFAR -100 and ImageNet-100. The method may be promoted to be used in an update and upgrade process of any deployed model.

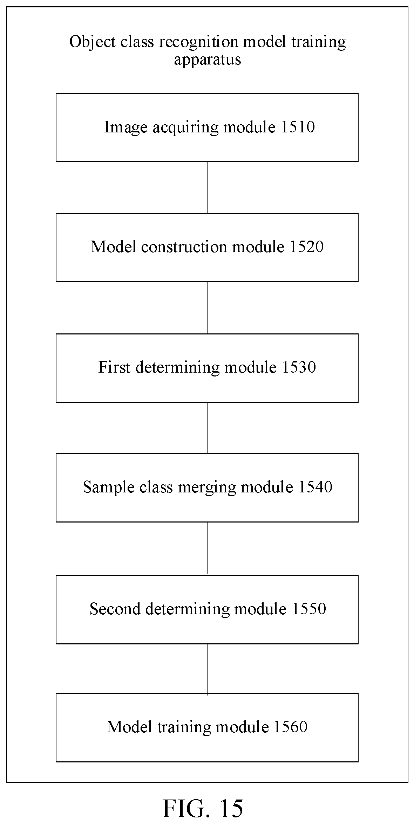

According to an embodiment of this specification, an object class recognition model training apparatus is further provided. As shown in FIG. 15, the apparatus includes:
an image acquiring module 1510, configured to acquire a sample image of a sample object, the sample image having a first label of a first object class outside a set of object classes recognizable by an initial object class recognition model;
a model construction module 1520, configured to construct a teacher model and a student model based on the initial object class recognition model, each of the teacher model and the student model being a copy of the initial object class recognition model;
a first determining module 1530, configured to input the sample image into the teacher model, to obtain a first recognition result, the first recognition result and the newly added object class being data of a same type;
a sample class merging module 1540, configured to merge the first recognition result with the first label, to obtain a merged recognition result;
a second determining module 1550, configured to input the sample image into the student model, to obtain a second recognition result; and
a training module 1560, configured to train the student model based on a difference between the second recognition result and the merged recognition result, to obtain a final object class recognition model.

In an exemplary implementation, the apparatus further includes:
a sample processing module, configured to perform data perturbation processing on the sample image, to obtain processed sample data, the perturbation processing being configured for introducing noise into the sample image; and
a first loss determining module, configured to respectively input the processed sample data into the teacher model and the student model, to obtain a first loss; and
the training module includes:
   a second loss determining unit, configured to determine second loss based on the difference between the second recognition result and the merged recognition result;
   a third loss determining unit, configured to determine third loss based on the first loss and the second loss; and
   a parameter adjustment unit, configured to adjust a model parameter of the student model based on the third loss.

In an exemplary implementation, the first loss determining module includes:
a third sample result determining unit, configured to input the processed sample data into the teacher model, to obtain a third recognition result;
a fourth sample result determining unit, configured to input the processed sample data into the student model, to obtain a fourth recognition result; and
a first loss determining unit, configured to determine the first loss based on a difference between the fourth recognition result and the third recognition result.

In an exemplary implementation, the apparatus further includes:
an update module, configured to update, after a number of training epochs of the student model reaches a first preset number, the teacher model based on the model parameter of the student model, to obtain the final object class recognition model; wherein the training epochs are epochs for training the student model on the sample image.

In an exemplary implementation, the update module includes:
a teacher model update unit, configured to update, after the training epochs of the student model reaches the first preset number, the teacher model based on the model parameter of the student model each time a second preset number of training epochs of the student model is completed, to obtain an updated teacher model; and
an iterative update unit, configured to determine the updated teacher model as the final object class recognition model.

In an exemplary implementation, the iterative update unit includes:
a model update subunit, configured to update, after the quantity of training reaches the first preset number, the updated teacher model based on the model parameter of the student model each time the quantity of training reaches a second preset number; and
a model determining subunit, configured to determine the updated teacher model as the final object class recognition model after training is completed.

In an exemplary implementation, the model update subunit includes:
a current parameter acquiring subunit, configured to acquire a current model parameter of the student model each time a second preset number of training epochs of the student model;
a target parameter determining subunit, configured to process the current model parameter based on an exponential moving average algorithm, to obtain a processed model parameter; and
an update subunit, configured to update the teacher model based on the processed model parameter.

In an exemplary implementation, the target parameter determining subunit includes:
a weight determining subunit, configured to determine a first weight of the teacher model and a second weight of the student model based on a number of training epochs corresponding to the current model parameter, the first weight decreasing as the number of training epochs corresponding to the current model parameter increases, and the second weight increasing as the number of training epochs corresponding to the current model parameter increases, wherein the number of training epochs corresponding to the current model parameter is a number of epochs for which the student model is trained to obtain the current model parameter; and
a parameter processing subunit, configured to process the current model parameter based on the first weight, the second weight, and the exponential moving average algorithm, to obtain the processed model parameter.

In an exemplary implementation, the apparatus further includes:
an initial image acquiring module, configured to acquire an initial sample image of the sample object, the initial sample image being marked with a second label indicating one of the set of object classes;
an initial result determining module, configured to the initial sample image into a preset model for object class recognition to obtain an initial recognition result;
a sample loss determining module, configured to determine a sample loss based on a difference between the second label and the initial recognition result; and
an initial model determining module, configured to adjust a model parameter of the preset model based on the sample loss, to obtain the initial object class recognition model.

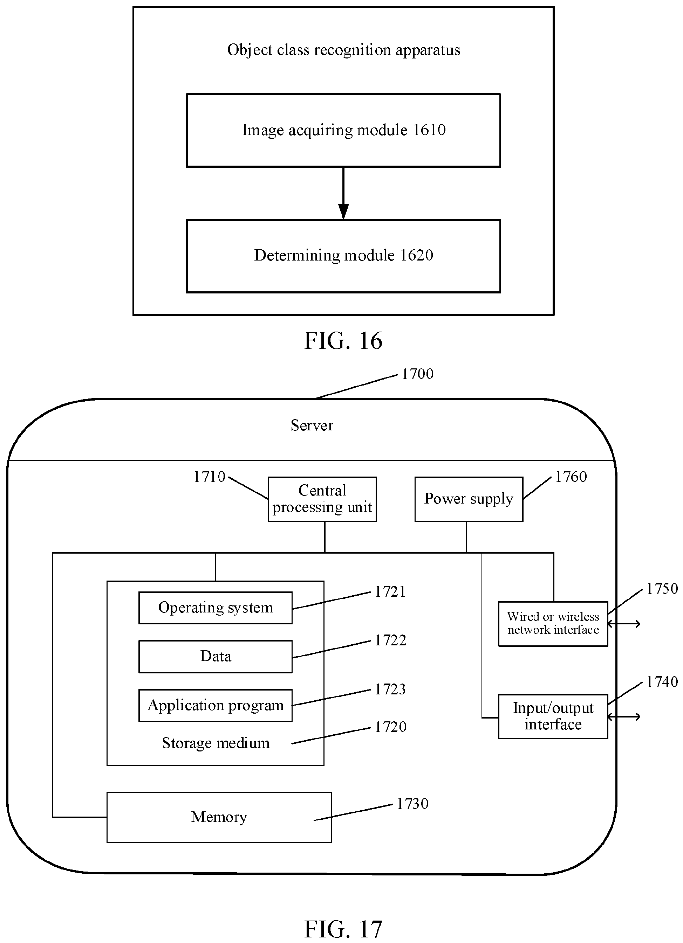

According to an embodiment of this specification, an object class recognition apparatus is further provided. As shown in FIG. 16, the apparatus includes:
an image acquiring module 1610, configured to acquire an image of a first object; and
a determining module 1620, configured to input the image into an object class recognition model, to obtain an object class of the first object,
the object class recognition model being obtained by the foregoing training method.

The apparatus in the apparatus embodiments and method embodiments are based on the same inventive concept.

According to an embodiment of this specification, an electronic device is provided. The device includes a processor and a memory, the memory storing at least one instruction or at least one program, and the at least one instruction or the at least one program being loaded and executed by the processor to implement the object class recognition model training method or the object class recognition method as provided in the foregoing method embodiments.

According to an embodiment of this application, a computer storage medium is further provided. The storage medium may be disposed in a terminal to store at least one instruction or at least one program configured for implementing an object class recognition model training method in the method embodiments, the at least one instruction or the at least one program being loaded and executed by a processor to implement the object class recognition model training method or the object class recognition method as provided in the foregoing method embodiments.

According to an embodiment of this application, a computer program product or a computer program is further provided, the computer program product or the computer program including computer instructions, and the computer instructions being stored in a computer-readable storage medium. A processor of a computer device reads the computer instructions from the computer-readable storage medium, and the processor executes the computer instructions, so that the computer device executes and implements the object class recognition model training method or the object class recognition method as provided in the foregoing method embodiments.

In one embodiment, in this embodiment of this specification, the storage medium may be located in at least one network server of a plurality of network servers of a computer network. In one embodiment, in this embodiment, the foregoing storage medium may include but is not limited to: any medium that can store program code, such as a USB flash drive, a read-only memory (ROM), a random access memory (RAM), a removable hard disk, a magnetic disk, or an optical disc.

In some embodiments of this specification, the memory may be configured to store a software program and module. The processor runs the software program and module stored in the memory, to implement various functional applications and data processing. The memory may mainly include a program storage area and a data storage area. The program storage area may store an operating system, an application program required by a function, and the like. The data storage area may store data created according to use of the device, and the like. In addition, the memory may include a high speed random access memory, and may also include a non-volatile memory, for example, at least one magnetic disk storage device, a flash memory, or another volatile solid-state storage device. Correspondingly, the memory may further include a memory controller, to provide access of the processor to the memory.

The method embodiments of training object class recognition model provided in the embodiments of this specification may be executed in a mobile terminal, a computer terminal, a server or a similar computing apparatus. Using an example in which the method embodiments are run on a server, FIG. 17 shows a block diagram of a hardware structure of a server used in an object class recognition model training method according to an embodiment of this specification. As shown in FIG. 17, the server 1700 may have a great difference due to different configuration or performance, and may include one or more central processing units (CPU) 1710 (where the CPU 1710 may include but is not limited to a processing unit such as a microprocessor MCU or a programmable logic device FPGA), a memory 1730 configured to store data, and one or more storage mediums 1720 (for example, one or more mass storage devices) storing an application program 1723 or data 1722. The memory 1730 and a storage media 1720 may be transient storage or persistent storage. A program stored in the storage medium 1720 may include one or more modules, and each module may include a series of instruction operations on the server. Further, the CPU 1710 may be set to communicate with the storage medium 1720, and perform, on the server 1700, the series of instruction operations in the storage medium 1720. The server 1700 may further include one or more power supplies 1760, one or more wired or wireless network interfaces 1750, one or more input/output interfaces 1740, and/or one or more operating systems 1721, for example, Windows ServerTM, Mac OS XTM, UnixTM, LinuxTM, and FreeBSDTM.

An input/output interface 1740 may be configured to receive or transmit data through a network. A specific example of the foregoing network may include a wireless network provided by a communication provider of the server 1700. In an example, the input/output interface 1740 includes a network interface controller (NIC), which may be connected to another network device through a base station, thereby communicating with the Internet. In an example, the input/output interface 1740 may be a radio frequency (RF) module, which is configured to communicate with the Internet in a wireless manner.

A person of ordinary skill in the art may understand that the structure shown in FIG. 17 is only for the purpose of illustration, and does not cause a limitation to the structure of the foregoing electronic apparatus. For example, the server 1700 may also include more or fewer components than those shown in FIG. 17, or have a configuration different from that shown in FIG. 17.

From the foregoing embodiments of the object class recognition model training method, the apparatus, the device, or the storage medium provided in this application, it can be seen that this application discloses an object class recognition model training method, including: acquiring a sample image of a sample object, the sample image having a first label of a first object class outside a set of object classes recognizable by an initial object class recognition model; constructing a teacher model and a student model based on the initial object class recognition model; inputting the sample image into the teacher model to obtain a first recognition result; merging the first recognition result with the first label to obtain a merged recognition result. The merged recognition result not only contains correct answer information indicated by the first label, but also retains decision boundary information of the teacher model for the set of object classes, and corrects an error made by the teacher model in the first recognition result. In this way, the merged recognition result carries richer information for training the student model. After a second recognition result is obtained by inputting the sample image into the student model, the student model is trained based on a difference between the second recognition result and the fused recognition result, to obtain a final object class recognition model. Through such training, the student model can accurately learn decision boundary information and avoid repeating the error made by the teacher model, thereby improving a learning effect of the student model and enhancing accuracy of the final object class recognition model. Moreover, by means of the label merged processing, the initial object class recognition model can be updated using only the sample image in a model update training process without a need to acquire any initial sample image. The model improves model performance by learning new data without forgetting historical knowledge, thereby achieving a knowledge accumulation effect similar to that of a full-data model. In addition, compared with a full-data training approach, the model training method of this application greatly shortens training duration and improves model update efficiency.

The sequence of the foregoing embodiments of this specification are merely for description purpose but do not represent the preference of the embodiments. Embodiments of this specification are described above. Other embodiments fall within the scope of the appended claims. In some embodiments, the actions or operations recorded in the claims may be performed in sequences different from those in the embodiments and an expected result may still be achieved. In addition, the processes described in the accompanying drawings are unnecessarily performed in the shown particular orders or sequential orders to achieve the expected result. In some implementations, multitasking and parallel processing may be feasible or beneficial.

The embodiments in this specification are all described in a progressive manner, for same or similar parts in the embodiments, refer to these embodiments, and descriptions of each embodiment focus on a difference from other embodiments. Especially, an apparatus embodiment, a device embodiment, or a storage medium embodiment is basically similar to a method embodiment, and therefore is described briefly; for related parts, refer to partial descriptions in the method embodiment.

A person of ordinary skill in the art may understand that all or some of the operations of the foregoing embodiments may be implemented by using hardware, or may be implemented by a program instructing relevant hardware. The program may be stored in a computer storage medium. The storage medium mentioned above may be a read-only memory, a magnetic disk, an optical disc, or the like.

The foregoing descriptions are merely exemplary embodiments of this application, but are not intended to limit this application. Any modification, equivalent replacement, or improvement made within the spirit and principle of this application shall fall within the protection scope of this application.

## Claims

1. An object class recognition model training method, the method comprising:
acquiring a sample image of a sample object, the sample image having a first label of a first object class outside a set of object classes recognizable by an initial object class recognition model;
constructing a teacher model and a student model based on the initial object class recognition model, each of the teacher model and the student model being a copy of the initial object class recognition model;
inputting the sample image into the teacher model, to obtain a first recognition result;
merging the first recognition result with the first label, to obtain a merged recognition result;
inputting the sample image into the student model, to obtain a second recognition result; and
training the student model based on a difference between the second recognition result and the merged recognition result, to obtain a final object class recognition model.

2. The method according to claim 1, the method further comprises:
performing data perturbation processing on the sample image, to obtain processed sample data, the perturbation processing being configured for introducing noise into the sample image; and
respectively inputting the processed sample data into the teacher model and the student model, to obtain a first loss;
wherein the training the student model based on a difference between the second recognition result and the merged recognition result comprises:
determining a second loss based on the difference between the second recognition result and the merged recognition result;
determining a third loss based on the first loss and the second loss; and
adjusting a model parameter of the student model based on the third loss.

3. The method according to claim 1 or 2, wherein the respectively inputting the processed sample data into the teacher model and the student model, to obtain the first loss comprises:
inputting the processed sample data into the teacher model, to obtain a third recognition result;
inputting the processed sample data into the student model, to obtain a fourth recognition result; and
determining the first loss based on a difference between the fourth recognition result and the third recognition result.

4. The method according to any one of claims 1 to 3, wherein the method further comprises:
updating, after a number of training epochs of the student model reaches a first preset number, the teacher model based on the model parameter of the student model, to obtain the final object class recognition model; wherein the training epochs are epochs for training the student model on the sample image.

5. The method according to any one of claims 1 to 4, wherein the updating, after a number of training epochs of the student model reaches a first preset number, the teacher model based on the model parameter of the student model, to obtain the final object class recognition model comprises:
updating, after the training epochs of the student model reaches the first preset number, the teacher model based on the model parameter of the student model each time a second preset number of training epochs of the student model is completed, to obtain the final object class recognition model.

6. The method according to any one of claims 1 to 5, wherein the updating, after the training epochs of the student model reaches the first preset number, the teacher model based on the model parameter of the student model each time a second preset number of training epochs of the student model is completed, to obtain the final object class recognition model comprises:
updating, after the training epochs of the student model reaches the first preset number, the teacher model based on the model parameter of the student model each time a second preset number of training epochs of the student model is completed, to obtain the updated teacher model; and
determining the updated teacher model as the final object class recognition model.

7. The method according to any one of claims 1 to 6, wherein the updating, after the training epochs of the student model reaches the first preset number, the teacher model based on the model parameter of the student model each time a second preset number of training epochs of the student model is completed, to obtain the updated teacher model comprises:
acquiring a current model parameter of the student model each time a second preset number of training epochs of the student model;
processing the current model parameter based on an exponential moving average algorithm, to obtain a processed model parameter; and
updating the teacher model based on the processed model parameter.

8. The method according to any one of claims 1 to 7, wherein the processing the current model parameter based on an exponential moving average algorithm, to obtain a processed model parameter comprises:
determining a first weight of the teacher model and a second weight of the student model based on a number of training epochs corresponding to the current model parameter, the first weight decreasing as the number of training epochs corresponding to the current model parameter increases, and the second weight increasing as the number of training epochs corresponding to the current model parameter increases, wherein the number of training epochs corresponding to the current model parameter is a number of epochs for which the student model is trained to obtain the current model parameter; and
adding a first product of a current model parameter of the teacher model and the first weight to a second product of the current model parameter of the student model and the second weight, to obtain the processed model parameter.

9. The method according to any one of claims 1 to 8, wherein the initial object class recognition model is obtained by:
acquiring an initial sample image of the sample object, the initial sample image being marked with a second label indicating one of the set of object classes;
inputting the initial sample image into a preset model for object class recognition to obtain an initial recognition result;
determining a sample loss based on a difference between the second label and the initial recognition result; and
adjusting a model parameter of the preset model based on the sample loss, to obtain the initial object class recognition model.

10. An object class recognition method, the method comprising:
acquiring an image of a first object; and
inputting the image into an object class recognition model, to obtain an object class of the first object,
the object class recognition model being obtained by the training method according to any one of claims 1 to 9.

11. An object class recognition model training apparatus, the apparatus comprising:
an image acquiring module, configured to acquire a sample image of a sample object, the sample image having a first label of a first object class outside a set of object classes recognizable by an initial object class recognition model;
a model construction module, configured to construct a teacher model and a student model based on the initial object class recognition model, each of the teacher model and the student model being a copy of the initial object class recognition model;
a first determining module, configured to input the sample image into the teacher model, to obtain a first recognition result;
a sample class merging module, configured to merge the first recognition result with the first label, to obtain a merged recognition result;
a second determining module, configured to input the sample image into the student model, to obtain a second recognition result; and
a training module, configured to train the student model based on a difference between the second recognition result and the merged recognition result, to obtain a final object class recognition model.

12. An object class recognition apparatus, the apparatus comprising:
an image acquiring module, configured to acquire an image of a first object; and
a determining module, configured to input the image into an object class recognition model, to obtain a first object class of the first object,
the object class recognition model being obtained by the training method according to any one of claims 1 to 9.

13. An electronic device, the device comprising a processor and a memory, the memory storing at least one instruction or at least one program, and the at least one instruction or the at least one program being loaded and executed by the processor to implement the training method according to any one of claims 1 to 9 or the object class recognition method according to claim 10.

14. A computer storage medium, the computer storage medium storing at least one instruction or at least one program, and the at least one instruction or the at least one program being loaded and executed by a processor to implement the training method according to any one of claims 1 to 9 or the object class recognition method according to claim 10.

15. A computer program product, comprising computer instructions, the computer instructions, when executed by a processor, implementing the training method according to any one of claims 1 to 9 or the object class recognition method according to claim 10.
